# EUROPEAN PATENT SPECIFICATION

(11) **EP 3 306 247 B1**
(45) Date of publication and mention of the grant of the patent: **01.05.2019**
(21) Application number: 17194597.5
(22) Date of filing: 03.10.2017
(51) Int. Cl.: F28C 1/14, F28D 5/02

(54) **AIR-WATER HEAT EXCHANGER STRUCTURE AND METHOD FOR CONTROLLING AND ENHANCING THE OPERATION THEREOF**
LUFT-WASSER-WÄRMETAUSCHERSTRUKTUR UND VERFAHREN ZUR STEUERUNG UND VERBESSERUNG DES BETRIEBS DAVON
STRUCTURE D'ÉCHANGEUR DE CHALEUR AIR-EAU ET PROCÉDÉ DE COMMANDE ET D'AMÉLIORATION DE SON FONCTIONNEMENT

(30) Priority: 05.10.2016 IT 201600099929
(43) Date of publication of application: 11.04.2018
(73) Proprietor: LU-VE S.P.A., 21100 VARESE (IT)
(72) Inventor: MERLO, Umberto, 21040 Uboldo (VA) (IT); MARIANI, Giovanni, 21040 Uboldo (VA) (IT); FILIPPINI, Stefano, 21040 Uboldo (VA) (IT)
(74) Representative: Rastelli, Franco

(56) References cited:
- EP-A1- 1 698 847
- WO-A1-2008/151377
- WO-A1-2015/108603
- WO-A1-2015/173767
- GB-A- 1 559 329

## Description

### BACKGROUND OF THE INVENTION

The present invention concerns, in a first aspect thereof, an improved structure of a heat exchanger with enhanced performance.

In a second aspect thereof, the present invention concerns a method for controlling and regulating the operation of the heat exchanger structure of the invention.

As is known, many processes, in fact all closed thermodynamic cycles, both power and reverse cycles, and many industrial processes, require the release of heat to a heat sink, represented by the environment.

The lower the temperature during these processes, the better the overall energy performances.

This is particularly true if the release of heat involves condensation, of both cooling cycles and power cycles: in the first case, the energy efficiency ratio (EER) increases, in the second the cycle output increases.

The best heat sink for performing this process is certainly water, due to its optimal heat exchange characteristics and because it is generally available at relatively low temperatures throughout the year.

For this reason, most large thermal power stations are located near the sea, lakes or rivers and, where economically and technically feasible, groundwater is used.

However, in the increasingly frequent cases in which there is no ready supply of water in large quantities, the heat exchange necessarily takes place with the ambient air.

Although on the one hand, ambient air has the great advantage of being available everywhere and in an infinite quantity, it has numerous drawbacks, which can be summarised in the following points:
- Greatly varying temperatures, both throughout the day and throughout the year
- Low exchange coefficients, when compared with those of liquids or fluids in phase change
- Low density, entailing the need to move large volumes

The negative consequences of these characteristics are multiple and result in the need to accept, at least in certain periods of the year, high heat release temperatures, adopt large heat exchange surfaces and move large air flows. The energy efficiency of the processes is this affected, with an increase in the spaces occupied, auxiliary consumption of the electric fans, noise emissions and internal volumes of the cooling fluids.

Sometimes, direct exchange between the cycle operating fluid is preferred, and in this case the term "remote air-cooled condenser" is used; at other times, an intermediate heat-transfer fluid is adopted (water or water/glycol mixtures), and in this case the term "dry cooler" is used.

When dual heat exchange is required, dry coolers have the advantage that they facilitate the adoption of free cooling in conditioning plants, limit the cooling fluid content, and can be connected to a plurality of refrigerating machines, even using different fluids, thus using the entire heat exchange capacity regardless of the number of refrigerating units operating.

In order to limit said harmful consequences, the design of modern dry coolers and condensers has followed different trends:
a) The adoption of increasingly compact and efficient heat exchange matrixes, obtained by optimizing the turbulence geometry of the fins, adopting tubes with increasingly small diameters with increasingly efficient internal scoring geometries
b) The adoption of V-shaped equipments which limit the surface occupied (footprint)
c) The adoption of fans with increasingly aerodynamic blades and increasingly large diameters, with benefits in terms of efficiency and noise emission
d) The adoption of electronic motors, which provide high electrical efficiency and the possibility of varying the rotation speed, while maintaining high efficiency
e) The adoption of diffusers/silencers which, at the same speed as the fans, increase efficiency and reduce noise

It is also known that, conceptually, two methods of using the water are possible to boost the heat exchange of the condensers or dry coolers:
a) The first one consists in performing adiabatic cooling of the air upstream of the exchanger, increasing the relative humidity thereof, thereby obtaining a greater thermal drop between fluid to be cooled and air in the exchanger; to obtain high efficiencies from this process, the air must be passed through a matrix (evaporating pack) consisting of a set of sheets, generally made of cellulose, or plastic/metallic materials, characterized by folds with different inclination, at the top of which water is injected. A cross flow is produced in the pack which causes an intense contact between air and water, favouring evaporation of the latter at the expense of the heat supplied by the air, which therefore drops in temperature.
b) The second one consists in directly spraying suitably treated drops of water, for the dual purpose of avoiding deposits and corrosive effects, onto the heat exchange surfaces. In this case, the evaporation of the drops subtracts heat from the walls of the exchanger, which in turn draw it from the fluid to be cooled.

In both cases, the big problem is that only a fraction of the water flow introduced takes part in the process, while the remaining part can be dispersed in the ground, or collected in a tank and reintroduced into the process.

Said re-introduction, however, currently requires the use of complicated and expensive auxiliary systems for re-introduction and treatment of the water to be adapted to the exchangers on a time-by-time basis.

WO 2015/173767 A1 discloses a convector for air cooling of a fluid flowing in a pipe, comprising: a path for a cooling air flow comprising an inlet from and an outlet towards the environment, a heat exchange section comprising a tube bundle defining a heat exchange surface and provided in the path for the air flow, fan means producing the air flow along the path so that the air flow externally invests the tube bundle on the heat exchange surface, a humidifying section arranged in the path, upstream of the heat exchange section, where water is atomized to be invested by the air flow; the convector has a wetting device for wetting directly with water a portion of the heat exchange surface of the tube bundle to further cool the portion of tube bundle.

GB 1 559 329 A discloses an air cooled atmospheric heat exchanger for cooling a hot liquid with ambient derived air having a plurality of thermally conductive, synthetic resin sheets re-bent upon themselves to present individual transversely U-shaped structures which are oriented in upright, inverted, juxtaposed disposition in use with adjacent structures being joined to present a heat exchange pack, the upright sidewalls of each structure is located in horizontally spaced disposition, joined at the upper ends thereof by an overlying, integral top bight portion, and defines a substantially upright air passage for horizontal flow of ambient derived air therethrough which enters respective structures of the pack at one upright, open end face of each of the structures below respective top portions and exits from the upright, open opposite end face thereof, the upright sidewalls of adjacent structures also being in horizontally spaced relationship with means being provided to interconnect and seal the upright, adjacent side margins of proximal structures for preventing loss of liquid along substantially the entire longitudinal lengths thereof to cause the sidewalls of adjacent structures to define upright liquid conveying passages therebetween each of which has a substantially horizontally extending liquid inlet and a liquid discharge at the top and bottom respectively; the liquid passages alternate with the air passages and allow liquid to gravitate downwardly therethrough in heat exchange relationship with air moving in cross flow relationship thereto through the air passages each of the sidewalls being provided with integral projecting segments which extend into the liquid receiving passages to increase the flow path of liquid gravitating downwardly on the surfaces of respective sides and also extending into the area between the sidewalls defining each air passage for imparting turbulence to the air flowing through corresponding air passages; elongated, horizontal support elements extend beneath a plurality of the top bight portions of the heat exchange structures in load bearing relationship thereto to fully support the pack.

WO 2015/108603 A1 discloses an adiabatic condenser or fluid cooler having a condensing or fluid cooling coil, an adiabatic pad wherein water can be used to cool the ambient air before entering or impacting the condensing or fluid cooling coil. Controls are provided that can adjust or eliminate the amount of water flowing over the adiabatic pad. The adiabatic pad may al so be physically moved to allow ambient air to directly impact the condensing or fluid cooling coil.

### SUMMARY OF THE INVENTION

The aim of the present invention is to provide an air and water heat exchanger structure having compact dimensions, enhanced exchange capacity and reduced water consumption, with a directly integrated system of collection and re-introduction or re-circulation of the water, which can be further treated as appropriate.

Within the scope of the above-mentioned aim, a main object of the present invention is to provide a heat exchanger structure of the type indicated, designed to avoid any distortion of the atomized water flows from the exchanger nozzles due to the effect of side wind, thus avoiding waste of water and failures or defects in the discharged power.

A further object of the present invention is to provide a heat exchanger structure of the type indicated, the operation of which is extremely silent, due also to the high speeds of the air generator fans.

A further object of the present invention is to provide a heat exchanger structure of the type indicated, whose heat exchange battery, or finned pack, is perfectly protected from possible external corrosive attacks.

A further object of the present invention is to provide a heat exchanger structure of the type indicated including an innovative control and adjustment system which provides optimal regulation of operation of the exchanger to obtain a significant reduction in its consumption of energy and water.

A further object of the present invention is to provide a heat exchanger structure of the type indicated which can also be supplied by means of two separate water inlets and which includes an autonomous control unit for controlling the water quality, in particular designed to maintain in real time and in an optimal manner the pH and the conductivity of the water.

A further object of the present invention is to provide a heat exchanger structure of the type indicated, whose heat exchange battery, or finned pack, is efficiently protected from external corrosive agents, in particular, for example, from air polluted by industrial pollutants and/or marine air.

Last but not least, a further object of the invention is to provide a heat exchanger structure of the type indicated, with safe and reliable operation, which can be produced at a competitive cost from materials and components available on the market and requires minimum maintenance.

The aim and objects mentioned above, as well as further objects which will become more apparent hereinafter, are achieved, according to an aspect of the present invention, by a heat exchanger structure having the characteristics of independent claim 1.

According to a further aspect of the present invention, the aim and objects mentioned above, as well as further objects which will become more apparent hereinafter, are also achieved by an innovative method for controlling the operation of the heat exchanger structure, according to the appended method claims.

### BRIEF DESCRIPTION OF THE DRAWINGS

Further characteristics and advantages of the heat exchanger structure according to the present invention and of the inventive method for the operation thereof will become clearer below from the following detailed description of a currently preferred embodiment thereof, illustrated by way of non-limiting example in the accompanying drawings, in which:
FIG. 1 is a perspective view of a currently preferred embodiment of the air-water heat exchanger structure, according to the present invention;
FIG. 2 is a further perspective view of the heat exchanger structure shown in FIG. 1, with parts removed;
FIG. 3 is a schematic view on an enlarged scale of a front portion of the heat exchanger structure of the preceding figures;
FIG. 4 is a partial perspective view on a further enlarged scale of a lateral or side wall of the heat exchanger structure of the invention;
FIG. 5 is a general schematic view of the heat exchanger structure of the present invention; and
FIG. 6 is a qualitative graph illustrating a logic regulation system associated with the heat exchanger structure of the present invention and also forming part of the present invention.

### DISCLOSURE OF THE PREFERRED EMBODIMENT

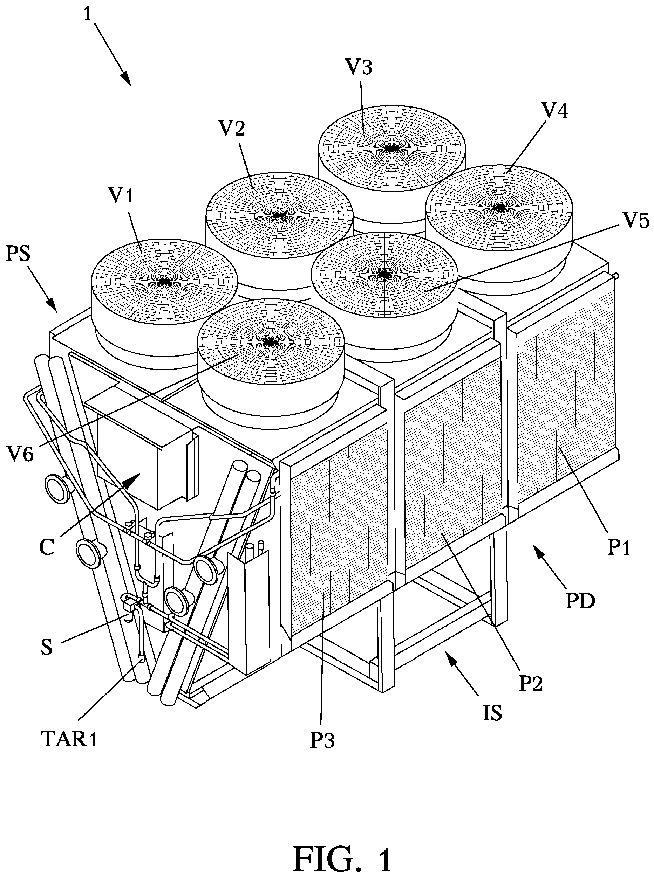

With reference to FIGS 1 to 3, a preferred embodiment of the air-water heat exchanger structure, according to the present invention, is generally indicated by the reference number 1.

As can be seen, said embodiment comprises a substantially parallelepipedal hollow housing in the form of a water collection tank CR, limited by two side walls of which only the right-hand side wall PD is shown in detail in FIG. 1, while the left-hand side wall PS is simply outlined.

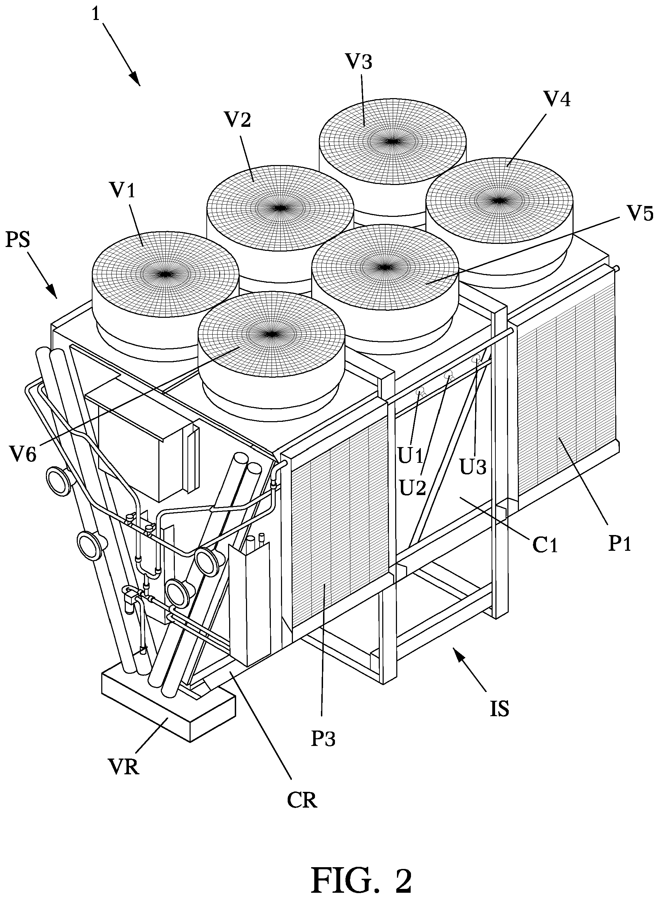

According to the present invention, the two side walls are advantageously covered by an internal heat exchange battery, preferably of the finned type, of which only the central portion C1 is shown in FIG. 2.

The heat exchange battery is covered, according to the present invention, by three panels P1, P2 and P3, constituting the so-called adiabatic panels of the exchanger structure in question, which in turn cover the heat exchange battery.

In FIG. 2, the central adiabatic panel P2 has been removed, to show a portion of the underlying heat exchanger battery P1, and a system of top spray nozzles U1, U2, U3, U4, U5, U6, for spraying water into the adiabatic pack, extending downwards and associated with the top wall of the housing 1 of the exchanger in question which also comprises, at the bottom, a supporting framework in the form of a stand, generally indicated by the reference letters IS.

The top wall of the housing also supports a plurality of fans V1, V2, V3, V4, V5 and V6, designed to generate air, with appropriate flow rate and speed, to be blown simultaneously onto the heat exchange battery C1 and onto the panels of the adiabatic pack P1, P2, P3, onto each of which the above-mentioned respective top nozzles U1, U2, U3 spray an appropriate amount of water at a predetermined flow rate and frequency.

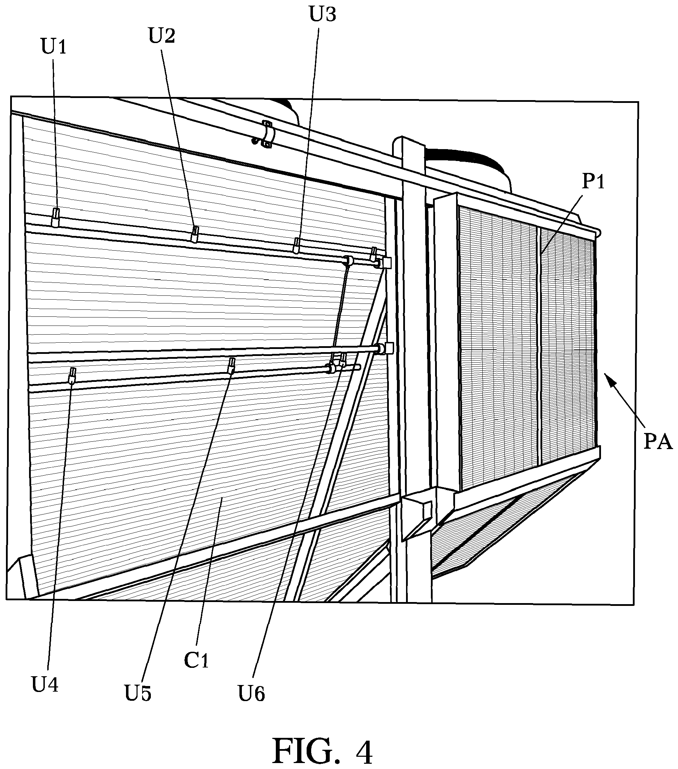

FIG. 4 shows a further enlarged partial perspective detail view of the heat exchanger, according to the present invention, with the external adiabatic pack PA and the adjacent underlying heat exchange battery and with the spray system schematically indicated by the upper and lower nozzle row.

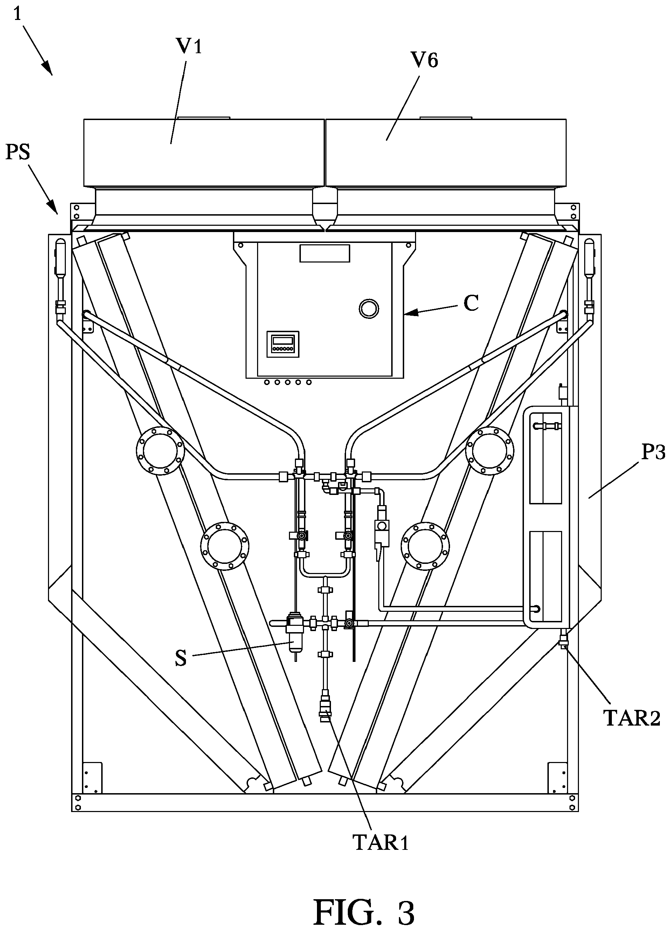

FIG. 3 shows in greater detail the front part of the housing of the heat exchanger of the invention, showing in particular the hydraulic ducts for appropriate conveying of the cooling water and showing in particular probe means S for water control.

In FIG. 3 the reference letters TAR1, TAR2 indicate the mains water inlet, particularly two separate inlets for the water, TAR1 for supplying spraying water and TAR2 for supplying water to be sprayed on the adiabatic pack PA, while the reference letter C indicates a regulation control unit for regulating operation of the structure of the exchanger of the invention, which will be described more specifically hereinafter, operating a new and inventive regulation and control system.

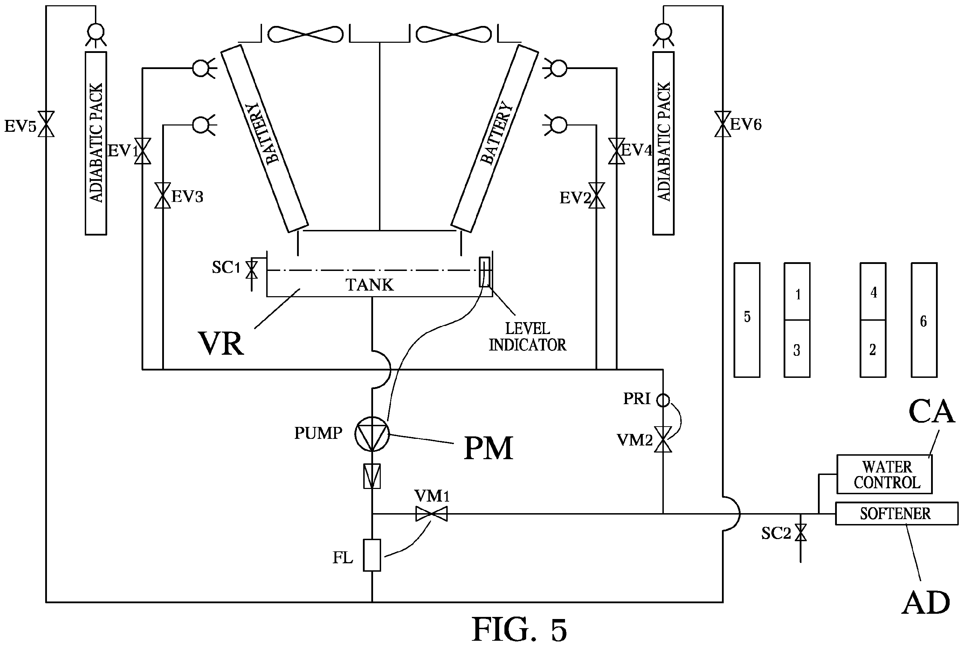

FIG. 5 shows a schematic view of the complete system of the heat exchanger of the present invention, operating simultaneously in the spray mode and adiabatic pack mode.

It can be seen from FIG. 5 that the adiabatic pack and the underlying heat exchange battery are installed on both the side walls of the housing of the heat exchanger 1.

FIG. 5 also shows a pump, generally indicated by the reference letters PM, as well as a water control unit, generally indicated by the reference letters CA and a water softener generally indicated by the reference letters AD, solenoid valves EV, discharge solenoid valves SC, modulating valves VM1 and VM2, a flow meter FL and a pressure probe PR1.

The operating statuses of the main valves included in the heat exchanger structure of the present invention are shown in the attached table 1, also highlighting the opening order of the sectors.

The present invention teaches the use of water in sequence for both the processes initially described, i.e. first the treated water is sprayed onto the heat exchange battery and the non-evaporated water is then re-introduced onto the adiabatic pack.

This combination of the two operating modes in series, in which the air first crosses the adiabatic pack and then the exchange battery, while the water is first injected from the exchange battery and then introduced into the adiabatic pack, has positive effects both on the thermal power exchanged and on the water consumption.

In other words, according to the present invention, the mentioned increase in the discharged power occurs via the combination of two contributions:
1) effect of adiabatic humidification of the air through the adiabatic pack (reduction of dry bulb temperature at the inlet of the finned part with consequent increase in the sensible and latent heat exchange bias);
2) effect of the evaporation latent heat due to atomization of the treated water onto the heat exchange battery (heat subtracted from the fluid inside the exchange battery tubes).

The heat exchanger structure of the invention provides the following further advantages:

### Elimination of the wind effect on the spray system

Installation of the adiabatic pack in front of the heat exchange battery, i.e. outside the exchanger housing, prevents distortions of the flow atomized by the nozzles onto the battery due to the side wind, thus avoiding waste of water and discharged power failures (in particular when the fan speed is low, lower suction effect of the water flow from the nozzles to the battery).

### Reduction in noise level due to the shielding effect of the adiabatic pack

The reduction in noise level is greater on the surface portions surrounding the unit directly facing the adiabatic/finned pack (normal air suction side) whereas on the fan delivery side, the overall effect can be further enhanced by installing a Whisperer PLUS® silencer (well known to a person skilled in the art); furthermore, the shielding effect is very effective when the SPRAY system is operating, in particular at low fan rotation speeds.

### Reduction in water consumption

During combined operation of the two systems PA+Spray, the water atomized on the heat exchange battery is collected in a channel positioned below the battery and conveyed to a side in which a small collecting basin is formed, where a pump sends the water thus collected to the adiabatic pack, supplying it without further consumption. Upon request it is possible to mount a UV lamp to neutralize any bacteria.

### Versatility of the system

Possibility of supplying the system with two separate water inlets, one for the spray and one for the adiabatic pack.

### Anti-corrosion and anti-scaling solutions for the heat exchange battery

Protection of the finned pack against external corrosive attacks (air with industrial and/or marine pollution).
- Fins of finned pack made of a special 5005 aluminium alloy.
- As mentioned and shown in FIG. 5, downstream of the softener AD there is a control unit CA for controlling the water quality: the monitored parameters are pH and conductivity (the most significant parameters for controlling corrosion of the finned pack). Advantageously, the control unit will have two safety levels:
- When the set threshold values are slightly exceeded it will generate a warning.
- When a second threshold is exceeded, an alarm is activated, stopping the system.

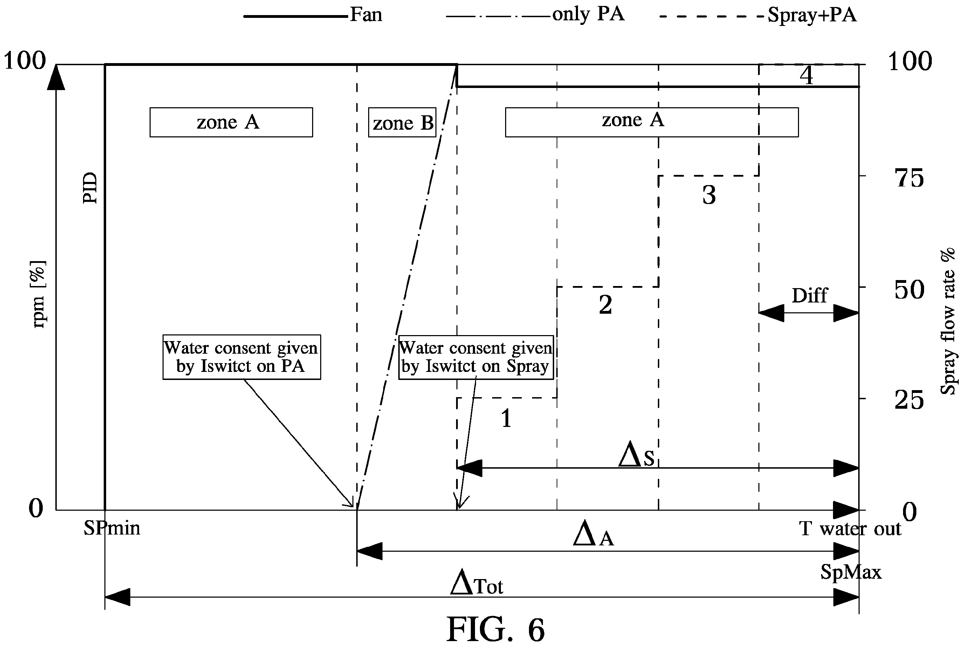

Referring to FIG. 6, the regulation system or unit which, as mentioned, also constitutes a primary characteristic of the present invention, will now be described, bearing in mind that the exchanger has three operating modes in the combined configuration:
- Dry: dry operation, the fan rpm are adjusted.
- PA only: only the adiabatic pack is sprayed with water. The fan speed is constant.
- Spray+PA: finned battery sprayed with water, the PA is supplied only by the water collected in the tank. The fan speed is constant.

The combination of these methods provides optimal regulation in terms of energy saving and water consumption. In the case of dry coolers, the control variable is the water outlet temperature (Tw,out), and for condensers, the inlet pressure.

To explain the logic, and with reference to FIG. 6, the latter highlights the main parameters and the operating field is divided into zones:
1) SPmax design condition.
2) The band (Spmax-ΔS) delimits zone C in which, according to a differential (fixed) on Tw,out, the 4 sectors of the spray can be closed/opened, with PA operating. Operation of the spray is allowed only if the ambient temperature is higher than a set switch temperature. Therefore the two conditions, in order of importance, are:
   1) Tambient >Tswitch,spray
   2) Tw,out > (SPmax-ΔS)
3) Similarly zone B is delimited in which only the adiabatic pack PA operates. The water flow rate on the PA will be proportionally regulated according to Tw,out. In this case, the conditions for activating the PA are:
   1) Tambient >Tswitch,PA (always Tswitch,PA<Tswitch,spray)
   2) Tw,out > (SPmax-ΔA)
4) SPmin set point set to minimum, identified by (SPmax-ΔTot), corresponds to the minimum acceptable Tw,out. The fans V1 to V6 are regulated in PID logic (or similar) to maintain SPmin. This creates a dry operation zone A in which, with fans at maximum speed, the increase of Tw,out is accepted.

Table 1 shows the states of the valves in the various zones, highlighting the opening order of the sectors. For the numbering, refer to the diagram of FIG. 6.

**Table 1: Opening/closing of valves, state of pump and fans in the regulation zones.**

| **Zones** | **0-A** | **B** | **C1** | **C2** | **C3** | **C4** |
|---|---|---|---|---|---|---|
| **OPEN** | - | V1, EV5, EV6 | V2, EV1, EV6 | V2, EV1, EV2, EV5, EV6 | V2, EV1, EV2, EV3, EV5, EV6 | V2, EV1, EV2, EV3, EV4, EV5, EV6 |
| **CLOSED** | all | V2 | V1, EV2, EV3, EV4, EV5 | V1, EV3, EV4 | V1, EV4 | V1 |
| **PUMP** | OFF | OFF | ON | ON | ON | ON |
| **FAN** | ON PID | ON const. | ON const. | ON const. | ON const. | ON const. |

To count the hours per year of operation of the spray, total and partial counters will be used; the partial counters will re-set at the end of the year.

If the hours/year set value for the spray is exceeded, a warning will be generated.

To make the spraying hours/year uniform, a logic for driving rotating ramps is implemented on the battery.

The first module switched on will not always be the same, it will rotate between the 4 available.

### Detailed explanation of the three zones/control phases A. B. C (FIG. 6)

ZONE A) Initially the fan speed is modulated so as to maintain the set point (like Dry).

Once the maximum fan speed has been reached, the adiabatic pack is enabled (as soon as the water flows to the adiabatic pack, the fan speed is maintained fixed at the set speed).

ZONE B) The water flow rate to the adiabatic pack is regulated according to the same regulation as zone A up to the maximum permitted flow rate.

Once the maximum water flow rate to the adiabatic pack has been reached, the spray phase is enabled.

ZONE C) In this case the regulation is in 4 steps so that the spray will remain inactive until the demand corresponding to the first step is reached. When the first step is reached:
- The modulating valve (V1) which regulates the flow of water to the adiabatic packs is closed (the adiabatic packs will use only the "waste" water of the spray nozzles collected in the tank through the pump).
- The first spray solenoid valve is activated.
- The modulating valve (V2) which regulates the flow of water to the spray nozzles is activated.
- The adiabatic pack on the opposite side of the unit is simultaneously activated.

The pump for recovering the water from the tank will be automatically adjusted so as to maintain the level constant.

Naturally it is also possible to extend the cited control method to the spray water flow rate control: it is possible to vary the number of steps or to regulate with stepless modulating valve.

From the above, it can be seen that the present invention fully achieves the intended aim and objects.

In fact, an extremely compact heat exchanger structure is provided, which allows a considerable increase in the discharged thermal power associated with a marked reduction in the energy and water required for operation of the exchanger structure.

In addition, the exchanger structure of the invention allows to eliminate the wind effect on the spraying system, reduce the noise level due to the shielding effect of the adiabatic pack, substantially reduce water consumption since during the combined operation of two systems, adiabatic pack plus spray, the water atomized on the heat exchange battery is collected in a tank CR or channel positioned below the battery and conveyed to a side on which a small collecting tank or basin VR is formed, where a collecting pump sends the water thus collected back to the adiabatic pack, supplying it without further consumption.

The structure of the present invention is furthermore extremely versatile from an operation standpoint since it is possible to supply the structure by means of two separate water inlets, one for the spray and one for the adiabatic pack.

Although the heat exchanger structure of the invention has been described with specific reference to a currently preferred embodiment thereof, the embodiment described above can be subject to numerous modifications and variations, all falling within the scope of the inventive concept, as defined by the appended claims.

## Claims

1. A water-air heat exchanger structure comprising a substantially parallelepipedal tank housing, delimited by two side walls, two end walls, a bottom wall and a top wall, wherein each of said two side walls (PD,PS) supports a heat exchange finned battery assembly (C1) and an adiabatic pack assembly (PA), wherein said adiabatic pack assembly is positioned in front of or externally to said heat exchange battery assembly and wherein said heat exchanger structure further comprises first water spray nozzle means (U) for spraying drops of water onto said heat exchange battery assembly (C1), second water spray means for spraying drops of water onto said adiabatic pack (PA) and fan means (V) for generating air flows suitable to favour the evaporation of said water; to said exchanger structure being associated valve means (EV) for control of said water and a central control unit (CA) controlling said valve means for spraying water onto said heat exchange battery assembly thereby causing evaporation of said water and suitable to re-introduce or re-spray non-evaporated water on said adiabatic pack assembly, **characterized in that** said bottom tank housing consists of a water collection channel (CR), located below said heat exchange battery (C1), conveying the water so as to create a collection tank (VR) including a pump (PM) sending the recovered water back to the adiabatic pack (PA); said structure comprising two separate water inlets: (TAR1) for supplying spraying water which falls from the heat exchange battery (C1), and (TAR2) for supplying the water to be sprayed onto the adiabatic pack (PA), respectively.

2. A heat exchanger structure, according to claim 1, **characterized in that** said heat exchange battery assembly comprises a finned pack with a plurality of fins made of a special 5005 aluminium alloy.

3. An operating method of the exchanger structure, according to any one of the preceding claims, **characterized in that** said process comprises at least three phases or main operating zones, i.e.: a first dry operating phase in which the r.p.m. of the fan means are regulated, a second spraying phase in which only said adiabatic pack is sprayed with water, while said r.p.m. are maintained constant, and a third combined phase in which said finned heat exchange battery is sprayed with water, and **in that** said adiabatic pack is supplied only by the water collected in and recovered by said tank/basin CR/VR and the r.p.m. of said fan means are constant, wherein in said first phase the speed of said fan means is initially modulated so as to maintain a reference point set as "dry" and, once a maximum speed of said fan means is reached, said adiabatic pack is enabled wherein, as soon as water starts flowing to the adiabatic pack, said speed of said fan means is maintained fixed at the value of said set reference point; in said second phase the flow rate of said water to said adiabatic pack is regulated by means of the same regulation as said first phase up to the maximum permitted flow rate, and once said maximum permitted flow rate of said water has been reached, said adiabatic pack is enabled for said spraying; in said third phase a regulation is obtained with at least four steps, stages or levels, in which in the first step the spraying is maintained inactive until the demand corresponding to the first step is reached; when the first step is reached, modulating valve means (EV1) regulating the flow of water to the adiabatic packs (PA) are closed, said adiabatic packs using only recovery water of the spraying nozzles (U) collected in said tank (VR) via said pump means (PM); first solenoid valve spraying means (EV1-EV4) being then activated; modulating valve means (VM1,VM2) regulating the flow of water to a spraying system being subsequently activated; and said adiabatic pack (PA) being simultaneously activated.

4. A method, according to claim 3, **characterized in that** it comprises the phase of automatically regulating the water recovery pump (PM) of said tank (VR) so as to maintain the level of said water in said tank constant.

5. A method, according to claim 4, **characterized in that** the spraying water flow rate is controlled by means of variation of the number of said steps.

6. A method, according to claims 3 and 4, **characterized in that** the spraying water flow rate is controlled by continuous regulation with said modulating valve means (VM1, VM2) and flow meter (FL).

## Patentansprüche

1. Wasser-Luft-Wärmetauscherstruktur, die ein im Wesentlichen quaderförmiges Behältergehäuse umfasst, das von zwei Seitenwänden, zwei Stirnwänden, einer unteren Wand und einer oberen Wand begrenzt ist, wobei jede der beiden Seitenwände (PD, PS) eine Wärmetauscher-Lamellengruppenanordnung (C1) und eine adiabatische Paketanordnung (PA) trägt, wobei die adiabatische Paketanordnung vor oder außerhalb der Wärmetauscher-Gruppenanordnung angeordnet ist und wobei die Wärmetauscherstruktur ferner erste Wassersprühdüsenmittel (U) zum Sprühen von Wassertropfen auf die Wärmetauscher-Gruppenanordnung (C1), zweite Wassersprühdüsenmittel zum Sprühen von Wasser auf das adiabatische Paket (PA) und Gebläsemittel (V) zum Erzeugen von Luftströmungen, die die Verdunstung des Wassers begünstigen, umfasst; wobei der Wärmetauscherstruktur Ventilmittel (EV) zur Steuerung des Wassers und eine zentrale Steuereinheit (CA) zugeordnet sind, die die Ventilmittel zum Sprühen von Wasser auf die Wärmetauscher-Gruppenanordnung steuert, wodurch eine Verdunstung des Wassers hervorgerufen wird, und die geeignet ist, nicht verdunstetes Wasser erneut der adiabatischen Paketanordnung zuzuführen oder auf diese zu sprühen, **dadurch gekennzeichnet, dass** das untere Behältergehäuse aus einem Wassersammelkanal (CR) besteht, der unterhalb der Wärmetauschergruppe (C1) angeordnet ist, der Wasser befördert, um einen Sammelbehälter (VR) zu erzeugen, der eine Pumpe (PM) umfasst, die das gewonnene Wasser zurück zu dem adiabatischen Paket (PA) leitet; wobei die Struktur zwei getrennte Wassereinlässe umfasst: (TAR1) zur Zuführung von Sprühwasser, das von der Wärmetauschergruppe (C1) tropft, beziehungsweise (TAR2) zur Zuführung des Wassers, das auf das adiabatische Paket (PA) gesprüht werden soll.

2. Wärmetauscherstruktur nach Anspruch 1, **dadurch gekennzeichnet, dass** die Wärmetauscher-Gruppenanordnung ein Lamellenpaket mit mehreren Lamellen umfasst, die aus einer speziellen 5005-Aluminiumlegierung hergestellt sind.

3. Betriebsverfahren der Wärmetauscherstruktur nach einem der vorhergehenden Ansprüche, **dadurch gekennzeichnet, dass** der Vorgang mindestens drei Phasen oder Hauptbetriebsbereiche umfasst, d. h.: eine erste trockene Betriebsphase, in der die Drehzahlen der Gebläsemittel reguliert werden, eine zweite Sprühphase, in der nur das adiabatische Paket mit Wasser besprüht wird, während die Drehzahlen konstant gehalten werden, und eine dritte kombinierte Phase, in der die Lamellenwärmetauschergruppe mit Wasser besprüht wird und in der dem adiabatischen Paket nur das Wasser zugeführt wird, das in dem und durch den Behälter/das Becken (CR/VR) zurückgewonnen wurde und die Drehzahlen der Gebläsemittel konstant sind, wobei in der ersten Phase die Drehzahl der Gebläsemittel anfänglich geregelt wird, um einen Richtwert, der als "trocken" eingestellt ist, zu erhalten, und sobald eine maximale Drehzahl der Gebläsemittel erreicht ist, das adiabatische Paket aktiviert wird, wobei, sobald Wasser zu dem adiabatischen Paket zu fließen beginnt, die Drehzahl der Gebläsemittel auf dem Wert des eingestellten Richtwerts gehalten wird; wobei in der zweiten Phase die Durchflussmenge des Wassers zum adiabatischen Paket mittels der gleichen Regulierung wie bei der ersten Phase bis auf die maximal erlaubte Durchflussmenge reguliert wird, und sobald die maximal erlaubte Durchflussmenge des Wassers erreicht ist, das adiabatische Paket zum Sprühen aktiviert wird; wobei in der dritten Phase eine Regulierung mit mindestens vier Stufen, Phasen oder Ebenen erreicht wird, wobei in der ersten Stufe das Besprühen inaktiv gehalten wird, bis der Bedarf, der der ersten Stufe entspricht, erreicht ist; wobei sobald die erste Stufe erreicht ist, Regelventilmittel (EV1), die den Fluss von Wasser zu dem adiabatischen Paket (PA) regulieren, geschlossen werden, wobei das adiabatische Paket ausschließlich Rückgewinnungswasser der Sprühdüsen (U), das in dem Behälter (VR) über die Pumpenmittel (PM) gesammelt wird, verwenden; wobei anschließend die ersten Magnetventil-Sprühmittel (EV1-EV4) aktiviert werden; wobei im Anschluss Regelventilmittel (VM1, VM2), die den Fluss von Wasser zu einem Sprühsystem regulieren, aktiviert werden; und wobei gleichzeitig das adiabatische Paket (PA) aktiviert wird.

4. Verfahren nach Anspruch 3, **dadurch gekennzeichnet, dass** es die Phase der automatischen Regulierung der Wasserrückgewinnungspumpe (PM) des Behälters (VR) umfasst, um den Pegel des Wassers im Behälter konstant zu halten.

5. Verfahren nach Anspruch 4, **dadurch gekennzeichnet, dass** die Sprühwasser-Durchflussmenge durch Veränderung der Anzahl der Schritte gesteuert wird.

6. Verfahren nach Anspruch 3 und 4, **dadurch gekennzeichnet, dass** die Sprühwasser-Durchflussmenge durch ständige Regulierung mit den Regelventilmitteln (VM1, VM2) und dem Durchflussmesser (FL) gesteuert wird.

## Revendications

1. Structure d'échangeur de chaleur eau-air comprenant une enceinte de réservoir substantiellement parallélépipédique délimitée par deux parois latérales, deux parois terminales, une paroi inférieure et une paroi supérieure, dans laquelle chacune des deux parois latérales (PD, PS) supporte un ensemble de batterie à ailettes d'échange de chaleur (C1) et un ensemble de paquet adiabatique (PA), dans laquelle ledit ensemble de paquet adiabatique est positionné devant ou à l'extérieur dudit ensemble de batterie d'échange de chaleur, et dans laquelle ladite structure d'échangeur de chaleur comprend en outre un premier moyen de buse de pulvérisation d'eau (U) pour pulvériser des gouttes d'eau sur ledit ensemble de batterie d'échange de chaleur (C1), un deuxième moyen de pulvérisation d'eau pour pulvériser des gouttes d'eau sur ledit paquet adiabatique (PA), et un moyen de ventilateur (V) pour générer des flux d'air appropriés afin de favoriser l'évaporation de ladite eau ; étant associés à ladite structure d'échangeur un moyen de vanne (EV) pour contrôler ladite eau et une unité de commande centrale (CA) commandant ledit moyen de vanne pour pulvériser de l'eau sur ledit ensemble de batterie d'échange de chaleur, provoquant ainsi l'évaporation de ladite eau, et adaptés pour réintroduire ou repulvériser de l'eau non évaporée sur ledit ensemble de paquet adiabatique, **caractérisée en ce que** ladite enceinte de réservoir inférieure consiste en un canal de collecte d'eau (CR) situé sous ladite batterie d'échange de chaleur (C1), qui convoie l'eau de manière à créer un réservoir de collecte (VR) comprenant une pompe (PM) qui renvoie l'eau récupérée au paquet adiabatique (PA) ; ladite structure comprenant deux entrées d'eau séparées : (TAR1) pour alimenter de l'eau de pulvérisation qui tombe de la batterie d'échange de chaleur (C1), et (TAR2) pour alimenter l'eau à pulvériser sur le paquet adiabatique (PA), respectivement.

2. Structure d'échangeur de chaleur selon la revendication 1, **caractérisée en ce que** ledit ensemble de batterie d'échange de chaleur comprend un paquet à ailettes avec une pluralité d'ailettes constituées d'un alliage d'aluminium spécial 5005.

3. Procédé de fonctionnement de la structure d'échangeur selon l'une quelconque des revendications précédentes, **caractérisé en ce que** ledit processus comprend au moins trois phases ou zones de fonctionnement principales, c'est-à-dire : une première phase de fonctionnement à sec dans laquelle la vitesse de rotation du moyen de ventilateur est régulée, une deuxième phase de pulvérisation dans laquelle seul ledit paquet adiabatique est pulvérisé avec de l'eau, alors que ladite vitesse de rotation est maintenue constante, une troisième phase combinée dans laquelle ladite batterie d'échange de chaleur à ailettes est pulvérisée avec de l'eau, et **en ce que** ledit paquet adiabatique est alimenté uniquement avec l'eau collectée et récupérée dans ledit réservoir/bassin CR/VR et la vitesse de rotation dudit moyen de ventilateur est constante, dans lequel, lors de ladite première phase, la vitesse dudit moyen de ventilateur est initialement modulée de manière à maintenir un point de référence établi comme « sec », et une fois la vitesse maximale dudit moyen de ventilateur atteinte, ledit paquet adiabatique est activé, dans lequel, dès que de l'eau commence à s'écouler vers le paquet adiabatique, ladite vitesse dudit moyen de ventilateur est maintenue fixe à la valeur dudit point de référence établi ; dans ladite deuxième phase, le débit de ladite eau vers ledit paquet adiabatique est régulé au moyen de la même régulation que ladite première phase jusqu'au débit maximal autorisé, et une fois ledit débit maximal autorisé de ladite eau atteint, ledit paquet adiabatique est activé pour ladite pulvérisation ; dans ladite troisième phase, une régulation est obtenue avec au moins quatre étapes, étages ou niveaux, où dans la première étape, la pulvérisation est maintenue inactive jusqu'à ce que la demande correspondant à la première étape soit atteinte ; quand la première étape est atteinte, le moyen de vanne de modulation (EV1) qui régule le débit d'eau vers les paquets adiabatiques (PA) est fermé, lesdits paquets adiabatiques utilisant uniquement l'eau récupérée des buses de pulvérisation (U) collectée dans ledit réservoir (VR) via ledit moyen de pompe (PM) ; un premier moyen de pulvérisation à électrovanne (EV1-EV4) étant alors activé ; un moyen de vanne de modulation (VM1, VM2) qui régule le débit d'eau vers un système de pulvérisation étant ensuite activé ; et ledit paquet adiabatique (PA) étant activé simultanément.

4. Procédé selon la revendication 3, **caractérisé en ce qu'il** comprend la phase de régulation automatique de la pompe de récupération d'eau (PM) dudit réservoir (VR) de manière à maintenir constant le niveau de ladite eau dans ledit réservoir.

5. Procédé selon la revendication 4, **caractérisé en ce que** le débit d'eau de pulvérisation est contrôlé par la variation du nombre desdites étapes.

6. Procédé selon les revendications 3 et 4, **caractérisé en ce que** le débit d'eau de pulvérisation est contrôlé par régulation continue à l'aide dudit moyen de vanne de modulation (VM1, VM2) et dudit débitmètre (FL).
